Europäisches Patentamt

European Patent Office

Office européen des brevets

(19)

(11) **EP 0 735 364 A2**

(12) **EUROPÄISCHE PATENTANMELDUNG**

(43) Veröffentlichungstag:
02.10.1996 Patentblatt 1996/40

(51) Int. Cl.⁶: **G01N 27/416**

(21) Anmeldenummer: 96104639.8

(22) Anmeldetag: 22.03.1996

(84) Benannte Vertragsstaaten:
**AT BE CH DE DK ES FR GB IT LI NL SE**

(30) Priorität: **27.03.1995 DE 19511138**

(71) Anmelder:
• **Schirmer, Eckehart**
**04736 Waldheim (DE)**
• **Berthold, Christian**
**04736 Meinsberg (DE)**

(72) Erfinder:
• **Berthold, Christian**
**04736 Meinsberg (DE)**
• **Cammann, Karl**
**48155 Münster (DE)**
• **Schirmer, Eckehart**
**04736 Waldheim (DE)**

(74) Vertreter: **Heyner, Klaus, Dr.-Ing.**
**Oelsaer Weg 36**
**01189 Dresden (DE)**

(54) **Verfahren und Vorrichtung zum Messen der Konzentration einer Gaskomponente A in einem Gasgemisch**

(57) Beschrieben wird ein neues coulometrisches Verfahren zur kontinuierlichen Bestimmung oder Detektion von Gaskomponenten in einem Gasgemisch, die reaktionsfähig sind, wie Schwefeldioxid, Ammoniak, Schwefelwasserstoff, Stickoxide, Kohlendioxid.

Die Erfindung zeichnet sich dadurch aus, daß die zu bestimmende Gaskomponente A (Analyt) eines Gasgemisches in einem geeigneten Elektrolyten chemisch mit einer vorher elektrolytisch mit Hilfe von zwei Generatorelektroden (7, 11) im Überschuß erzeugten spezifisch reaktionsfähigen Sustanz in einer durch eine Diffusionsbarriere (10) vom Gasgemisch getrennten Reaktionskammer (16) als Teil der Elektrolytkammer (13) umgesetzt wird. Dabei wird dieses Abfangreagenz verbraucht, was mit einem geeigneten Indikatorsystem registriert wird.
Je höher die Konzentration der Gaskomponente A im Gasgemisch ist, desto höher ist nach den Fick'schen Gesetzen die in die Elektrolytkammer (13) eindiffundierende Gasmenge und umso größer ist der Verbrauch des Abfangreagenz und damit der Gradient des Indikatorsignals.
Davon ausgehend wird die Änderungsgeschwindigkeit (Indikatorsignal-Änderung pro Zeit, also: mV/s, mA/s, oder umgewandelt in Konzentrationsänderung pro Zeiteinheit) gemessen oder über eine Kalibrierung mit der jeweils aktuell vorliegenden Konzentration in Verbindung gebracht. Durch diese relativ kurzzeitigen Gradienten-Messungen werden langfristige Drifterscheinungen der Indikations-Messung kompensiert.

FIG. 1

EP 0 735 364 A2

**Beschreibung**

Die Erfindung bezieht sich auf ein neues coulometrisches Verfahren zur kontinuierlichen Bestimmung oder Detektion von Gaskomponenten in einem Gasgemisch nach dem Oberbegriff des Anspruchs 1 sowie auf eine Vorrichtung zur Durchführung des Verfahrens.

Seit 30 Jahren bekannt sind potentiometrisch arbeitende Gassensoren. Dazu zählen alle Meßaufbauten, die der $CO_2$-Elektrode von Severinghaus nachempfunden sind. Hierbei bildet das $CO_2$-Gas in einem wäßrigen Elektrolyten Hydrogencarbonat, welches als Säure wirkt und Protonen abspaltet. Letztere verändern den pH-Wert einer sehr dünnen (< 1mm) Elektrolytschicht unmittelbar vor einer pH-sensitiven Elektrode. Dabei ist die Art der Indikatorelektrode oder das Meßprinzip unerheblich, da nur die erzeugte pH-Wert-Verschiebung in den sauren Bereich von der Konzentration des $CO_2$ abhängt.

Es gibt inzwischen eine Reihe von Patenten, die die Art dieser Indikatorelektrode und auch die Anordnung oder Verbesserungen der Produktionstechnologien zum Gegenstand haben (US 48 42 697, US 48 46 937, JP 120 565/86, JP 5120/83, DE 38 09 624, DE 32 47 575).

Im Patent US 49 43 364 wird ein faseroptischer Sensor beschrieben, dessen Wirkprinzip auf der Protonierung/Deprotonierung eines Hydrogels und der damit verbundenen Änderung der optischen Eigenschaften beruht. Ähnliche Anordnungen wurden mehrfach in der Fachliteratur (z.B.: O.S. Wolfbeis, Fresenius Z. Anal. Chem. 325 (1986) 387) beschrieben, wobei die pH-Optroden und auf diesem Prinzip basierende Gassensoren am umfangreichsten untersucht wurden. Das Funktionsprinzip von $CO_2$- und $NH_3$-Sensoren entspricht dabei dem der potentiometrischen Gassensoren. Die pH-Optrode befindet sich in einer entsprechenden Innenlosung, die von der Gasphase durch eine permeable Membran getrennt ist.

Ebenfalls bekannt sind amperometrische Gassensoren, die membranbedeckt (Clark-Sensoren) oder mit Airgap-System in Ausführungen mit Zwei- oder Drei-Elektrodenanordnungen auf dem Markt der chemischen Gassensoren dominieren.

Eine weitere Gruppe von Sensoren beruht auf der spezifischen Adsorption von Gasmolekülen an Halbleiteroberflächen. Es findet dabei ein Elektronentransfer zwischen den Gasmolekülen und der Halbleiteroberfläche statt, die die Anzahl der freien Ladungsträger und so die Leitfähigkeit der Halbleiterschicht in Abhängigkeit von der Gaskonzentration verändert. Nachteil dieser Sensoren ist die hohe Arbeitstemperatur (100°C - 500°C) und die damit verbundene hohe elektrische Leistungsaufnahmne. Ein weiterer gravierender Nachteil dieser Sensorkategorie ist die geringe Selektivität.

In DE 42 31 530 wird ein Kohlensäuregassensor beschrieben, der eine laminierte Struktur aufweist. Der Grundaufbau dieses Sensors umfaßt eine äußere Platte, die ein kohlensäuregaspermeables Fenster besitzt, eine Platte für eine pH-Elektrode und eine Platte für eine Referenzelektrode, wobei alle drei Platten laminiert ausgeführt sind. Die Platte für die pH-Elektrode umfaßt ein isolierendes Substrat, eine pH-sensitive Membran, die auf dem Substrat so gebildet ist, daß sie gegenüber dem kohlensäuregaspermeablen Fenster liegt, und einen Raum zur Aufnahme des Elektrolyten.

In der Infrarotmeßtechnik wird die spezifische IR-Absorption der zu messenden Gasbestandteile ausgenutzt. Der hohe technische Aufwand und die notwendige optische Weglänge bei der Messung kleiner Gaskonzentrationen macht eine Miniaturisierung schwierig. Die hohe Leistungsaufnahme und die Instabilität der verwendeten Strahlungsquellen sind weitere Nachteile solcher Anordnungen.

Weiterhin sind aus "Die coulometrische Analyse, Dr.phil. K. Abresch, Dipl.-Chem. Ingeborg Claasen, Verlag Chemie, Weinheim 1961, S. 98-111" coulometrische Verfahren bekannt, die eine komplette Titration mit elektrochemisch erzeugten Reagenzien jeweils bis zum Äquivalenz-punkt der betreffenden Titrationskurve (Indikatorelektrodensignal gegen coulometrisch erzeugte Reagenzmenge) durchführen. Jede Abweichung von einem analytspezifisch eingestellten Endpunktsmeßwert einer Indikatorelektrode wird mittels einer rückgekoppelten elektronischen Schaltung (Operationsverstärker) direkt gegengesteuert, indem eine dieser Abweichung proportionale Menge Reagenz elektrochemisch an einer Arbeitselektrode erzeugt wird. Meistens handelt es sich dabei um einfache Säure-Base Titrationen, weil sowohl Protonen als auch Hydroxid Ionen leicht an Edelmetallelektroden mit 100-%iger Stromausbeute erzeugt werden können.

Aber auch andere Abfangreaktionen für vom Analyten gebildete anzeigbare Ionen sind möglich. So kann man beispielsweise die sich bei der Auflösung von gasförmigem $H_2S$ in einem wäßrigen Elektrolyten bildenden Sulfidanionen durch elektrolytisch erzeugte Silberionen ausfällen. Indikatorelektrode ist dann eine sulfid-sensitive $Ag_2S$-Elektrode. Bei diesen total umsetzenden coulometrischen Verfahren ist die Generatorstromstärke direkt proportional der zu messenden Gaskonzentration. Bedingt durch die bekannte und konstante Stöchiometrie der jeweils ablaufenden chemischen und elektrochemischen Reaktionen kann die Analytkonzentration hierbei ohne weitere Kalibrierung mit Hilfe der Faradayschen Gesetze berechnet werden.

Nachteilig bei diesem Verfahren ist aber die Tatsache, daß es bei plötzlich auftretenden Konzentrationsschwankungen zu nicht 100-%igen Stromausbeuten oder nicht quantitativen Umsetzungen kommen kann und daher Fehlmessungen auftreten. Auch können andere Bestandteile der gasförmigen Probe, die elektrochemisch aktiv sind, ebenfalls an der Arbeitselektrode unter Stromfluß umgesetzt werden, oder bei ungefilterten Gasproben können feste Bestandteile die aktive Oberfläche der Generatorelektrode verkleinern, wodurch höhere Überspannungen erforderlich werden und evtl. weitere Stoffe im Elektrolyten elektrochemisch oxidiert oder reduziert werden, was ebenfalls zu Meßfehlern führt. Daher werden häufig auch coulometrische Verfahren mittels einer nur Gase durchlassenden Membran geschützt. Dann bestimmt natürlich der Transport des Analytgases durch die meist sehr dünne Membran die in der elektrochemischen Meßzelle entstehenden Analytkonzentrationen und man muß dieses konzentrationsabhängige Diffusionsverhalten der Membran einkalibrieren.

Sowohl bei den rein potentiometrisch messenden Anordnungen vom Severinghaus-Typ als auch bei den coulometrisch arbeitenden Meßzellen stört es sehr, wenn die Indikatorelektroden elektrochemisch driften und kein ausreichend stabiles Potential liefern. Da Einzelpotentiale nicht gemessen werden können, wird die Indikatorelektrode mit einer potentialstabilen Bezugselektrode zu einer elektrochemischen Meßkette komplettiert. Die Spannung dieser Indikator-Meßkette ist nun von der Analyt(Gas)-Konzentration abhängig. Bei zunehmender Miniaturisierung wird es aber zunehmend schwerer, stabile Bezugselektroden herzustellen, da der vor dem Eindringen störender, elektrochemisch aktiver Verunreinigungen schützende Elektrolyt-Stromschlüssel zu kleine Dimensionen annimmt. Die dann in wenigen Tagen in die Bezugselektrode mögliche Eindiffusion von potentialstörenden Stoffen verursacht ein zusätzliches, nicht analytverursachtes Driften der Indikatorelektroden-Meßspannung. Ein solches Driften führt sowohl bei der rein potentiometrischen Gasbestimmungsmethode als auch bei der coulometrischen End-punktmethode zu mehr oder weniger großen Fehlern und kann u.U. eine Spurenanalyse unmöglich machen.

Wegen dieser Probleme bei der wünschenswerten Miniaturisierung von entsprechenden Analysevorrichtungen wurden auch optische Methoden zur Messung der durch das zu messende Gas ausgelösten Reaktionen (z.B. pH-Wert Verschiebungen; Kohlendioxid ins Saure, Ammoniak ins Alkalische) eingesetzt. Aber auch die bei den sogenannten Optroden verwendeten Indikatorfarbstoffe, die in Absorption oder Fluoreszenz vermessen werden, zeigen eine Drift. Entweder entweicht die optische Indikatorverbindung langsam aus der Membranphase vor dem Ende eines Lichtleiters oder der Farbstoff wird durch das Licht "gebleicht", d.h. chemisch verändert.

Abgeleitet von diesem Stand der Technik ist es Aufgabe der Erfindung, ein neues coulometrisches Verfahren und eine neue, einfache und kostengünstige Vorrichtung zur kontinuierlichen Bestimmung der Konzentration von solchen Gasen als Bestandteil eines Gasgemisches zu entwickeln, die reaktionsfähig sind wie beispielsweise Schwefeldioxid, Ammoniak, Schwefelwasserstoff, Stickoxide, Kohlendioxid etc.. Die unvermeidbare Drift von Indikatorsystemen, wie potentiometrischen Meßketten, amperometrischen oder konduktometrischen Elektrodenanordnungen bzw. optischen Meßsystemen soll bei Anwendung des erfindungsgemäßen Verfahrens und der zugehörigen Vorrichtung nicht mehr störend wirken.

Diese Aufgabe wird erfindungsgemäß durch die Merkmale der Ansprüche 1 und 20 gelöst, die zugehörigen Unteransprüche zeigen weitere vorteilhafte Ausgestaltungen der Erfindung.

Erfindungsgemäß wird die zu bestimmende Gaskomponente A (Analyt) eines Gasgemisches in einem geeigneten Elektrolyten chemisch mit einer vorher elektrolytisch mit Hilfe von zwei Generatorelektroden im Überschuß erzeugten spezifisch reaktionsfähigen Substanz in einer durch eine Diffusionsbarriere vom Gasgemisch getrennten Reaktionskammer als Teil der Elektrolytkammer umgesetzt. Dabei wird dieses Abfangreagenz verbraucht, was mit einem geeigneten Indikatorsystem registriert wird.

Je höher die Konzentration der Gaskomponente A im Gasgemisch ist, desto höher ist nach den Fick'schen Gesetzen die in die Elektrolytkammer eindiffundierende Gasmenge und umso größer ist der Verbrauch des Abfangreagenz und damit der Gradient des Indikatorsignals.

Erfindungsgemäß wird also die Änderungsgeschwindigkeit (Indikatorsignal-Änderung pro Zeit, also: mV/s, mA/s, oder umgewandelt in Konzentrationsänderung pro Zeiteinheit) gemessen oder über eine Kalibrierung mit der jeweils aktuell vorliegenden Konzentration in Verbindung gebracht.

Durch diese relativ kurzzeitigen Gradienten-Messungen werden langfristige Drifterscheinungen der Indikations-Messung kompensiert. Letztere kann nach jeder Methode erfolgen, d.h. auch driftende optische Indikator-Messungen können neben elektrochemischen Techniken (Potentiometrie, Amperometrie, Konduktometrie) vorteilhaft benutzt werden.

Die Erfindung, die einen bestimmten schwachen Überschuß eines Reagenzes in der Meßzelle sozusagen titrimetrisch vorlegt, verhindert, daß analytabhängige Stoffe von dem Indikatorsystem direkt angezeigt werden. Durch die "Abfangreaktion" des im schwachen Überschuß befindlichen elektrochemisch durch Puls-Coulometrie erzeugten Reagenzes wird die Analytkonzentration in der Reaktionskammer sehr klein gehalten. Dies wiederum vergrößert den Konzentrationsgradienten nach außen und steigert dadurch die diffundierende Analytmenge. Dieses wirkt sich positiv auf die Ansprechgeschwindigkeit aus.

Wenn der Überschuß des Abfang-Reagenzes sehr klein bleibt, was coulometrisch einfach zu erreichen ist, indem nur immer bis zu einem bestimmten Indikatorsignal elektrolysiert wird, dann befindet sich die Sensor-Meßzelle im optimalen Empfindlichkeitsbereich der betreffenden zugrundeliegenden Titrationskurve. Geringste Mengen des eindiffundierenden Analytgases können so zu großen Änderungen des Indikatorsignals pro Zeiteinheit führen. Es ist daher erfindungsgemäß auch möglich, mit einer gegenüber potentiometrischen Meßzellen gesteigerten Empfindlichkeit zu messen.

Durch die Erfindung lassen sich Gasmeßzellen weiter miniaturisieren. Für miniaturisierte Gassensoren besteht ein großer Bedarf. In fast allen Bereichen der Wirtschaft und des täglichen Lebens findet man Anwendungsfelder für chemische Sensoren, die einerseits zur Meßwerterfassung in Regel- und Kontrollkreisen aber auch zur Detektion von toxischen Stoffen dienen. Durch das wachsende Umweltbewußtsein und die schärfere Umweltgesetzgebung wird die Nachfrage nach preiswerten Sensorlösungen zusätzlich unterstützt. Hauptanwendungsgebiete sind die Klimatechnik, die Umwelttechnik, der Personenschutz, die chemische Industrie und die Landwirtschaft.

Zur weiteren Erläuterung der Erfindung wird auf die Patentansprüche verwiesen. Die Verfahrensbeschreibung ist dabei Gegenstand der Ansprüche 1 bis 19. Eine vorteilhafte Ausführungsform des Sensoraufbaus wird im Anspruch 20 behandelt.

Weitere Einzelheiten, Merkmale und Vorteile der Erfindung ergeben sich auch aus der nachfolgenden Beschreibung von Ausführungsbeispielen unter Bezugnahme auf die zugehörige Zeichnung; es zeigen:

Fig. 1     eine Schnittdarstellung des miniaturisierten Aufbaus des Gassensors und

Fig. 2     den Verlauf typischer Meßvorgänge.

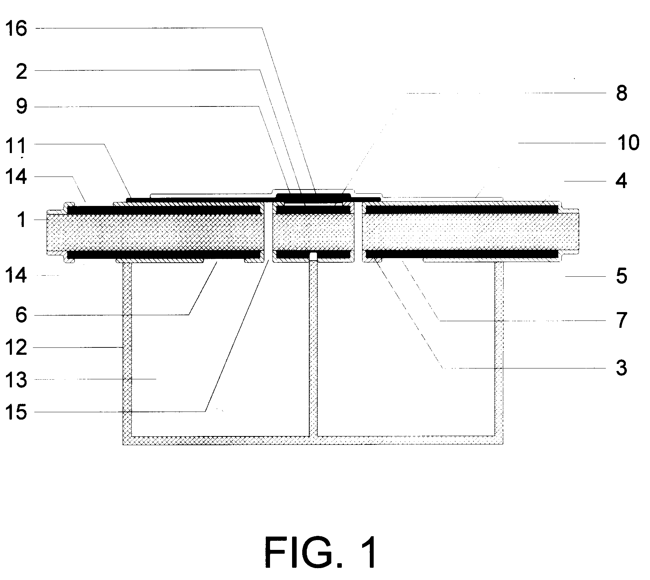

Fig. 1 zeigt schematisch die Schnittdarstellung des miniaturisierten Sensoraufbaus in Form von einfach und preiswert herzustellenden Sensor-Karten, die einen laminierten Schichtaufbau haben.

Die Anordnung besteht vorzugsweise aus einem Träger 1, der aus einem chemisch stabilen Polymer- oder Keramikmaterial hergestellt ist. Auf diesen Träger werden beidseitig Leitbahnebenen 2, 3 aufgebracht, wobei diese Ebenen durch physikalische Dampfphasenabscheidung mit anschließender photolithografischer Bearbeitung oder durch Auflaminieren vorstrukturierter Metallfolien erzeugt werden. Die Leitbahnebenen sind mit Isolatorschichten 4, 5 abgedeckt, die im Bereich der Elektroden 6, 7, 8 und der äußeren elektrischen Anschlüsse 14 Fensteröffnungen haben. Die Elektroden können durch galvanische Nachbehandlung oder durch Aufbringen von Polymerschichten modifiziert werden. Im Bereich der Indikatorelektrode 8 befindet sich ein poröser nichtleitender Abstandshalter 9. Auf die Struktur ist abschließend eine Membran 10 laminiert, die auf der der Grundstruktur zugewandten Seite metallisiert ist. Die metallisierte Schicht dient als Generatorelektrode 11 zur Erzeugung des Abfangreagenzes und ist im Bereich der Indikatorelektrode 8 netzförmig strukturiert, um ein gasdurchlässiges Fenster zu schaffen.

Unter optimalen Bedingungen kann für spezielle Anwendungen als Arbeitselektrode eine Elektrode aus einem Edelmetall mit oxidierter Oberfläche (Iridiumoxid, Paladiumoxid, Rutheniumoxid etc.) gewählt werden, die dann bei Stromlosigkeit als pH-sensitive Indikatorelektrode dienen kann. Dies verringert die Anzahl der bei der elektrochemischen Meßzelle notwendigen Elektroden von vier auf drei. Die Anordnung besteht weiterhin aus einem mit dem Träger verklebten Gehäuseteil 12, das zur Aufnahme von Elektrolytkammern 13 dient. Die Elektrolytkammern sind durch Öffnungen 15 im Träger 1 mit der Reaktionskammer (16) verbunden.

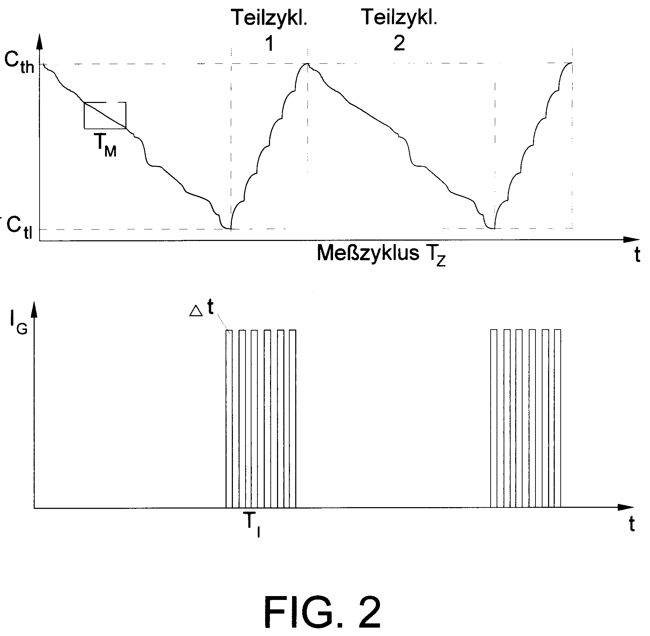

Die Fig. 2 zeigt den Verlauf typischer Meßvorgänge. Dabei wird in einem ersten Teilzyklus durch Pulscoulometrie eine Konzentration $C_{th}$ des Abfangreagenzes eingestellt. Dieser Prozeß wird während der Pausen zwischen den Generatorstromimpulsen mit dem Indikatorsystem überwacht und nach Erreichen der oberen Grenzkonzentration abgebrochen. Im zweiten Teilzyklus wird die Veränderung der Konzentration des Abfangreagenzes durch die Reaktion mit dem eindiffundierenden Analyt oder mit Reaktionsprodukten, die sich in Abhängigkeit vom Massenfluß des Analyts durch die Membran bilden, mit Hilfe des Indikatorsystems verfolgt, und aus dem numerisch ermittelten Gradienten des Signals wird die Konzentration des Analyts in der Gasphase bestimmt.

Die Berechnung des Gradienten des Indikatorsignals erfolgt über ein gleitendes Zeitfenster. Durch Variation der Länge dieses Zeitfensters $T_M$ werden integrierende Messungen mit großer Genauigkeit (lange Zeitfenster) aber auch Messungen schneller Vorgänge (kurze Zeitfenster) möglich.

Es versteht sich von selbst, daß das erfindungsgemäße Verfahren nicht an äußere Formen oder an eine Miniaturisierung gebunden ist.

Durch Wahl eines geeigneten Grundelektrolyten und der geeigneten Indikatorelektrode können Gase, die in einem coulometrischen Verfahren reaktionsfähig sind, erfaßt werden:

Beispiel a): SO$_2$-Sensor

Für die Bestimmung von Schwefeldioxid wird ein schwefelsaurer KBr-haltiger Eletrolyt verwendet. Als reaktionsfähiges Abfangreagenz wird entsprechend dem beschriebenen Verfahren anodisch Brom ($Br_2$) erzeugt. Das sich im Elektrolyt lösende SO$_2$ reagiert mit dem Brom entsprechend der Reaktion

$$SO_2 + Br_2 + 2H_2O \rightarrow 2HBr + H_2SO_4.$$

Als Indikatorsystem wird eine Meßkette zur Bestimmung des Redoxpotentials $Br_2/Br$ benutzt, die aus einer Pt-Elektrode und einer Ag/AgBr-Elektrode besteht.

Beispiel b) NH$_3$-Sensor

Zur Ammoniakmessung wird analog zu konventionellen potentiometrischen Gassensoren die Veränderung des pH-Wertes einer wäßrigen Elektrolytlösung entsprechend der Reaktion

$$NH_3 + H_2O \rightarrow NH_4^+ + OH^-$$

genutzt. Im ersten Teilzyklus wird in der Lösung durch die Erzeugung von Wasserstoffionen ein pH-Wert von 7,5 eingestellt. Der eindiffundierende Ammoniak verschiebt den pH-Wert dann wieder in Richtung alkalischerer Werte. Als Indikatorsystem wird eine aus einer Metalloxidelektrode und einer Ag/AgCl-Bezugselektrode bestehende Meßkette benutzt. Diese Konfiguration läßt sich mit einem anderen Elektrolytsystem auch für Gase wie $CO_2$ oder $SO_2$ einsetzen.

Liste der **Bezugzeichen**

1     - Träger

2     - Leitbahnebene (Indikatorelektrode)

3     - Leitbahnebene (Bezugselektrode, Generatorelektrode 2)

4,5     - Isolatorschichten

6     - Bezugselektrode

7     - Generatorelektrode 2

8     - ionenselektive Indikatorelektrode

9     - poröser Abstandshalter

10     - Diffusionsbarriere/Membran

11     - Metallisierung (Generatorelektrode 1)

12     - Gehäuse

13     - Elektrolytkammer

14     - elektrischer Anschluß

15     - Öffnungen im Träger 1

16     - Reaktionskammer

**Patentansprüche**

1. Verfahren zum Messen der Konzentration einer Gaskomponente A in einem Gasgemisch, das in einem coulometrischen Verfahren bestimmbar ist, **dadurch gekennzeichnet**, daß die Bestimmung in einer durch eine Diffusionsbarriere (10) vom Gasgemisch getrennten und mit einer Elektrolytlösung gefüllten Reaktionskammer (16) als Teil der Elektrolytkammer (13) periodisch in zwei Teilzyklen abläuft, wobei im Teilzyklus 1 mittels zweier Generatorelektroden (7, 11) elektrolytisch eine Substanz, die mit der nachzuweisenden Gaskomponente A spezifisch reagiert (Abfangreagenz), durch Generatorstrom-Impulse konstanter Höhe $I_G$ und konstanter Dauer $\Delta t$ erzeugt und der

Anstieg der Konzentration mit einem auf das Abfangreagenz spezifisch reagierenden Indikatorsystem ausgehend von einem unteren Indikatorgrenzsignal $c_{tl}$ bis zum Erreichen enes oberen Indikatorgrenzsignals $c_{th}$ registriert wird, und anschließend im Teilzyklus 2 bei abgeschaltetem Generatorstrom das Absinken der Konzentration des Abfangreagenz durch die spezifische Reaktion mit der Gaskomponente A (Abfangreaktion) bis zum Erreichen des unteren Indikatorgrenzsignals $c_{tl}$ registriert wird, wobei aus dem Verhältnis der im Teilzyklus 1 eingeprägten Ladungsmenge, die zur Vergrößerung der Konzentration des Abfangreagenz um $c_t = c_{th} - c_{tl}$ benötigt wurde, und dem Gradienten des Indikatorsignals die Konzentration der Gaskomponente A im Gasgemisch bestimmt wird.

2. Verfahren nach Anspruch 1, **dadurch gekennzeichnet**, daß die Indikation der Konzentrationsänderung des Abfangreagenz, die durch die abfangreaktion hervorgerufen wird, elektrochemisch erfolgt.

3. Verfahren nach Anspruch 1, **dadurch gekennzeichnet**, daß die Indikation der Konzentrationsänderung des Abfangreagenz, die durch die abfangreaktion hervorgerufen wird, optisch erfolgt.

4. Verfahren nach Anspruch 1 und 2, **dadurch gekennzeichnet**, daß die elektrochemische Indikation potentiometrisch mit Hilfe einer ionenselektiven Indikatorelektrode (8) und einer Bezugselektrode (6) erfolgt.

5. Verfahren nach Anspruch 4, **dadurch gekennzeichnet**, daß die Generatorelektrode 1 (11) (coulometrische Arbeitselektrode) aus einer ionenselektiven Oberfläche besteht und eine zusätzliche Indikatorelektrode (8) entfallen kann, wobei als Material für die ionenselektive Oberfläche Iridiumoxid, Paladiumoxid, Rutheniumoxid einsetzbar ist.

6. Verfahren nach Anspruch 4 oder 5, **dadurch gekennzeichnet**, daß als Generatorelektrode 2 (7) und Bezugselektrode (6) ein und dieselbe nichtpolarisierbare Elektrode mit großer Phasengrenzfläche eingesetzt wird, was den Aufbau mit nur zwei Elektroden sehr einfach gestaltet.

7. Verfahren nach Anspruch 4, **dadurch gekennzeichnet**, daß anstelle der Indikatormeßketten-Spannungsänderung pro Zeit die Konzentrationsänderung als Meßgröße herangezogen wird.

8. Verfahren nach Anspruch 1 und 2,
**dadurch gekennzeichnet**, daß die elektrochemische Indikation amperometrisch mittels einer bei einem konstanten Potential polarisierten Generatorelektrode 1 (11) erfolgt und die Stromstärke-Änderung pro Zeiteinheit (mA/sec) als Meßgröße dient.

9. Verfahren nach Anspruch 1 und 2,
**dadurch gekennzeichnet**, daß die elektrochemische Indikation konduktometrisch erfolgt und die Änderung der Leitfähigkeit pro Zeiteinheit (mS/sec) zur Auswertung herangezogen wird.

10. Verfahren nach Anspruch 1 und 3,
**dadurch gekennzeichnet**, daß die optische Methode eine Photometrie darstellt und als Meßgröße die zeitliche Änderung der Extinktion aufgenommen wird.

11. Verfahren nach Anspruch 1 und 3,
**dadurch gekennzeichnet**, daß die optische Methode eine Fluoreszenzmessung darstellt und die zeitliche Änderung der Intensität eines Fluoreszenzlichtes gemessen wird.

12. Verfahren nach einem der Ansprüche 1 bis 11,
**dadurch gekennzeichnet**, daß der Meßbereich und die Empfindlichkeit des Gassensors durch die Konzentration des im 1. Teilzyklus generierten Abfangreagenz festgelegt wird.

13. Verfahren nach einem der Ansprüche 1 bis 12,
**dadurch gekennzeichnet**, daß eine einfache Software den Teilzyklus 1 so einregelt, daß das Maximum der pro Zeiteinheit eindiffundierenden Analytmenge innerhalb von wenigen Sekunden erreicht wird.

14. Verfahren nach Anspruch 13,
**dadurch gekennzeichnet**, daß der Teilzyklus 1 bei vorgegebenen Indikatorgrenzsignalen ein- und ausgeschaltet wird.

15. Verfahren nach einem der Ansprüche 1 bis 14,
**dadurch gekennzeichnet**, daß die eigentliche Messung der Konzentration des Abfangreagenz und die Bestimmung der eindiffundierenden Analytmenge immer in den Pausen der Elektrolyse stattfindet, damit der Stromfluß zwischen den Generatorelektroden (7, 11) die Indikationsmethoden nicht stört.

16. Verfahren nach einem der Ansprüche 1 bis 15,
**dadurch gekennzeichnet**, daß die Absolutmengen des Analyten in der Meßzelle hinter der Diffusionsbarriere (10) coulometrisch hochgenau gemessen werden und die äußere Analytkonzentration über die bekannte und konstante Diffusion durch diese Diffusiosbarriere (10) errechnet wird.

17. Verfahren nach einem der Ansprüche 1 bis 16,
**dadurch gekennzeichnet**, daß mittels einer Pumpe bzw. einer anderen geeigneten Vorrichtung der Elektrolyt in der durch eine Diffusionsbarriere (10) abgetrennten Reaktionskammer periodisch ausgetauscht wird.

18. Verfahren nach einem der Ansprüche 1 bis 17,
**dadurch gekennzeichnet**, daß die elektrolytische Erzeugung des Abfangreagenzes in einer getrennten Elektrolysekammer erfolgt und der Elektrolyt nach dieser Anreicherung in die durch eine Diffusionsbarriere (10) abgetrennt Reaktionskammer (16) transportiert wird.

19. Verfahren nach einem der Ansprüche 1 bis 18,
**dadurch gekennzeichnet**, daß das coulometrisch erzeugte Abfangreagenz mit einem Stoff, der bei der Reaktion des Analyts mit einem Elektrolytbestandteil entsteht, reagiert.

20. Meßvorrichtung zur kontinuierlichen elektrochemischen Bestimmung der Konzentration von Gasen, die reaktionsfähig sind, wie Schwefeldioxid, Ammoniak, Schwefelwasserstoff, Stickoxide, Kohlendioxid zur Durchführung des Verfahrens nach einem der Ansprüche 1,2,4,9 sowie 13-16 und wobei die Meßvorrichtung eine laminierte Struktur aufweist,

**dadurch gekennzeichnet**, daß auf einen Träger (1), der aus einem chemisch stabilen Polymer- oder Keramikmaterial hergestellt ist, beidseitig Leitbahnebenen (2, 3) aufgebracht sind und
diese Leitbahnebenen (2, 3) mit Isolatorschichten (4, 5) so abgedeckt sind, daß sie im Bereich der Elektroden Bezugselektrode (6), Generatorelektrode 2 (7), Indikatorelektrode (8) und der äußeren elektrischen Anschlüsse (14) Fensteröffnungen aufweisen, wobei im Bereich der Indikatorelektrode (8) ein poröser, nichtleitender Abstandshalter (9) angeordnet ist und
auf diese Struktur eine Diffusionsbarriere (10) laminiert ist, die auf der der Grundstruktur zugewandten Seite metallisiert ist und als Generatorelektrode 1 (11) zur Erzeugung des Abfangreagenzes dient, wobei diese Generatorelektrode 1 (11) im Bereich der Indikatorelektrode (8) netzförmig strukturiert ausgeführt ist und
an der Unterseite des Trägers (1) ein Gehäuseteil (12) befestigt ist, das die Elektrolytkammern (13) enthält, wobei die Elektrolytkammern (13) durch Öffnungen (15) im Träger (1) mit der Reaktionskammer (16) verbunden sind.

FIG. 1

FIG. 2